# EUROPEAN PATENT APPLICATION

(11) **EP 4 835 818 A1**
(43) Date of publication of application: **04.11.2026**
(21) Application number: 24911031.3
(22) Date of filing: 23.12.2024
(51) Int. Cl.: G06T 7/73, G06T 7/80, G06T 7/11

(54) **VEHICLE HEAD AVOIDANCE METHOD, APPARATUS AND SYSTEM, AND COMPUTER-READABLE STORAGE MEDIUM**

(30) Priority: 26.12.2023 CN 202311810084
(71) Applicant: Tsinghua University, Haidian District Beijing 100084 (CN); Nuctech Company Limited, TongFang Building Shuangqinglu Haidian District Beijing 100084 (CN)
(72) Inventor: ZHANG, Li, Beijing 100084 (CN); ZHENG, Dachuang, Beijing 100084 (CN); LI, Dong, Beijing 100084 (CN); ZHANG, Chang, Beijing 100084 (CN); TU, Junjie, Beijing 100084 (CN); SUN, Yunda, Beijing 100084 (CN)
(74) Representative: Gunzelmann, Rainer
(86) International application number: PCT/CN2024/141447
(87) International publication number: WO 2025/140103

(57) **Abstract**

The present disclosure relates to a vehicle head avoidance method, apparatus and system, and a computer-readable storage medium. The vehicle head avoidance method comprises: acquiring a vehicle image to be subjected to detection which is collected by means of a visible-light area-array camera; acquiring a focal length of the camera by means of correcting intrinsic and extrinsic parameters of the camera; processing said vehicle image to obtain a pixel size of a vehicle head; acquiring the distance between the camera and the vehicle head; acquiring an actual size of the vehicle head on the basis of the focal length of the camera, the distance between the camera and the vehicle head, and the pixel size of the vehicle head; and performing vehicle head avoidance on the basis of the actual size of the vehicle head. In the present disclosure, a linear-array image collection device is replaced with a visible-light area-array camera, thereby reducing the use cost and installation cost, and reducing the occupied area.

## Description

### CROSS-REFERENCE TO RELATED APPLICATIONS

The present application is based on and claims priority to China Patent Application No. CN202311810084.0, filed on Dec. 26, 2023, the disclosure of which is incorporated by reference herein in its entirety.

### TECHNICAL FIELD

The present disclosure relates to the field of security inspection technology, particularly to a method, apparatus and system for avoiding a vehicle head, and computer-readable storage medium.

### BACKGROUND

The need for vehicle head avoidance arises when a vehicle, driven by personnel, passes through an X-ray radiation imaging security inspection system. To prevent the radiation from scanning the driver, it is necessary to separate a vehicle head where the driver is located from a carriage of the vehicle, ensuring that only the carriage is scanned.

The image data acquisition devices commonly used in related technologies, such as linear array cameras, area lasers, infrared light curtains, etc., collect the linear array sequential image information of a vehicle passing through the system. Based on vehicle body information in the images, the position of the vehicle head is determined, thereby separating the vehicle head from the carriage. Consequently, security inspections can then be conducted on the carriage.

### SUMMARY

According to an aspect of the present disclosure, there is provided a method for avoiding a vehicle head, comprising: acquiring an image of a vehicle to be detected captured by a camera, the camera being a visible light area array camera; acquiring a focal length of the camera by correcting intrinsic and extrinsic parameters of the camera; processing the image of the vehicle to be detected to acquire a pixel length of the vehicle head; acquiring a distance between the camera and the vehicle head; acquiring a real length of the vehicle head based on the focal length of the camera, the distance between the camera and the vehicle head, and the pixel length of the vehicle head; and performing vehicle head avoidance based on the real length of the vehicle head.

In some embodiments of the present disclosure, the acquiring a real length of the vehicle head based on the focal length of the camera, the distance between the camera and the vehicle head, and the pixel length of the vehicle head comprises: determining a first ratio based on a ratio of the pixel length of the vehicle head to the focal length of the camera; and determining the real length of the vehicle head based on a product of the first ratio and the distance between the camera and the vehicle head.

In some embodiments of the present disclosure, the acquiring an image of a vehicle to be detected captured by a camera comprises: acquiring a single image of the vehicle to be detected or a plurality of consecutive frames of images of the vehicle to be detected captured by the visible light area array camera.

In some embodiments of the present disclosure, the acquiring an image of a vehicle to be detected captured by a camera comprises: performing single-shot imaging by the visible light area array camera, without being affected by the speed of the vehicle to be detected.

In some embodiments of the present disclosure, the processing the image of the vehicle to be detected to acquire a pixel length of the vehicle head comprises: performing pixel segmentation on the image of the vehicle to be detected to determine positions of a plurality of components of the vehicle head, wherein the components comprises at least one of a window, a wheel, a rear edge of a driver's seat, a rear end of the vehicle head, or a front end of the vehicle head, and the image of the vehicle to be detected is a visible light image.

In some embodiments of the present disclosure, the performing vehicle head avoidance based on the real length of the vehicle head comprises: determining a vehicle head avoidance area; and performing the vehicle head avoidance according to the vehicle head avoidance area, and scanning an area other than the vehicle head avoidance area.

In some embodiments of the present disclosure, the determining a vehicle head avoidance area comprises any one of: setting an area from the front end of vehicle head to the rear end of the vehicle head as the vehicle head avoidance area; setting an area from the front end of the vehicle head to the rear edge of the driver's seat as the vehicle head avoidance area; or setting an area from the front end of the vehicle head to a rear edge of a window as the vehicle head avoidance area.

In some embodiments of the present disclosure, the processing the image of the vehicle to be detected to acquire a pixel length of the vehicle head comprises: for a single-frame image, extracting a pixel set of the vehicle head through a pixel segmentation method to acquire the pixel length of the vehicle head, wherein the pixel segmentation method comprises at least one of a pixel clustering method, a semantic segmentation method, or an instance segmentation method.

In some embodiments of the present disclosure, the processing the image of the vehicle to be detected to acquire pixel length of the vehicle head comprises: for a plurality of frames of consecutive images, averaging pixel segmentation results of the plurality of frames to determine the pixel length of the vehicle head; and for the plurality of frames of consecutive images, filtering out a background by using a multi-frame moving object detection method for a moving vehicle to be detected in a lane, so as to acquire a pixel set of the vehicle head.

In some embodiments of the present disclosure, the acquiring a focal length of the camera by correcting intrinsic and extrinsic parameters of the camera comprises: selecting a reference object parallel to a field of view of the camera; measuring a vertical distance from the reference object to the camera; measuring a real length of the reference object; acquiring intrinsic correction parameters of the camera through multi-angle checkerboard images, and acquiring a pixel length of the reference object in a corrected image; and determining the focal length of the camera based on the vertical distance from the reference object to the camera, the real length of the reference object, and the pixel length of the reference object in the corrected image.

In some embodiments of the present disclosure, the acquiring a distance between the camera and the vehicle head comprises at least one of: setting a fixed distance as the distance between the camera and the vehicle head; using a distance provided by a ranging sensor as the distance between the camera and the vehicle head; extracting depth information corresponding to a pixel set of the vehicle head from a depth image containing depth information provided by the camera to determine the distance between the camera and the vehicle head, wherein the depth image comprises a three-channel color image and a depth map; for a single-frame image, determining the distance between the camera and the vehicle head based on a distance and reference object information provided by pixel segmentation information; or for a single-frame image, acquiring a monocular depth estimation value, and acquiring a depth of the vehicle head based on an actual depth of the reference object to determine the distance between the camera and the vehicle head.

In some embodiments of the present disclosure, the determining the distance between the camera and the vehicle head based on a distance and reference object information provided by pixel segmentation information comprises: setting a first reference point and a second reference point on the ground, and setting the first reference point and the second reference point corresponding to a first reference pixel and a second reference pixel in an image captured by a monocular camera; setting a point to be measured corresponding to a pixel to be measured in the image captured by the monocular camera, wherein the point to be measured is a marking point where the vehicle head contacts the ground; setting a vertical projection point of the camera on the ground as a coordinate origin, wherein a distance between the point to be measured and the coordinate origin is greater than a distance between the first reference point and the coordinate origin, and the distance between the point to be measured and the coordinate origin is less than a distance between the second reference point and the coordinate origin; determining a distance between the first reference point and the point to be measured based on a distance between the first reference point and the second reference point, a distance between the first reference pixel and the second reference pixel, and a distance between the first reference pixel and the point to be measured; and determining the distance between the camera and the vehicle head based on the distance between the first reference point and the coordinate origin, and the distance between the first reference point and the point to be measured.

In some embodiments of the present disclosure, the determining a distance between the first reference point and the point to be measured based on a distance between the first reference point and the second reference point, a distance between the first reference pixel and the second reference pixel, and a distance between the first reference pixel and the point to be measured comprises: determining a second ratio based on a ratio of the distance between the first reference pixel and the pixel to be measured, to the distance between the first reference pixel and the second reference pixel; and determining the distance between the first reference point and the point to be measured based on a product of the second ratio and the distance between the first reference point and the second reference point.

According to another aspect of the present disclosure, there is provided an apparatus for avoiding a vehicle head, comprising: an image acquisition module configured to acquire an image of a vehicle to be detected captured by a camera, the camera being a visible light area array camera; a focal length acquisition module configured to acquire a focal length of the camera by correcting intrinsic and extrinsic parameters of the camera; a pixel length acquisition module configured to process the image of the vehicle to be detected to acquire a pixel length of the vehicle head; a distance acquisition module configured to acquire a distance between the camera and the vehicle head; a real length acquisition module configured to acquire a real length of the vehicle head based on the focal length of the camera, the distance between the camera and the vehicle head, and the pixel length of the vehicle head; and a vehicle head avoidance module configured to perform vehicle head avoidance based on the real length of the vehicle head.

According to another aspect of the present disclosure, there is provided an apparatus for avoiding a vehicle head, comprising: a memory for storing computer instructions; and a processor used to execute the instructions to enable the apparatus for avoiding a vehicle head to implement the method for avoiding a vehicle head as described in any of the above embodiments.

According to another aspect of the present disclosure, there is provided a system for avoiding a vehicle head, comprising: a visible light area array camera configured to capture an image of a vehicle to be detected; and an apparatus for avoiding a vehicle head as described in any one of the above embodiments.

According to another aspect of the present disclosure, there is provided a computer-readable storage medium, wherein the computer-readable storage medium stores computer instructions that, when executed by a processor, implement the method for avoiding a vehicle head as described in any one of the above embodiments.

According to another aspect of the present disclosure, there is provided a computer program, comprising: instructions that, when executed by a processor, cause the processor to execute the method for avoiding a vehicle head as described in any one of the above embodiments.

### BRIEF DESCRIPTION OF THE DRAWINGS

In order to more clearly explain the embodiments of the present disclosure or the technical solutions in the prior art, a brief introduction will be given below for the drawings required to be used in the description of the embodiments or the prior art. It is obvious that, the drawings illustrated as follows are merely some embodiments of the present disclosure. For a person skilled in the art, he or she may also acquire other drawings according to such drawings on the premise that no inventive effort is involved.
FIG. 1 is a schematic diagram of a method for avoiding a vehicle head based on an image acquisition sequence.
FIG. 2 is a schematic diagram of a system for avoiding a vehicle head according to some embodiments of the present disclosure.
FIG. 3 is a schematic diagram of a method and system for avoiding a vehicle head according to some embodiments of the present disclosure.
FIG. 4 is a schematic comparison diagram of an area array camera and a linear array image acquisition device according to some embodiments of the present disclosure.
FIG. 5 is a schematic diagram of the method for avoiding a vehicle head according to some embodiments of the present disclosure.
FIG. 6 is a schematic diagram of compressed vehicle head and wheels in related technical images.
FIG. 7 is a schematic diagram of the basic principle of the vehicle head avoidance process according to some embodiments of the present disclosure.
FIG. 8 is a schematic diagram of a method for acquiring a focal length of the camera according to some embodiments of the present disclosure.
FIG. 9 is a schematic diagram illustrating the defects in length segmentation of the vehicle head in binary and grayscale images.
FIG. 10 is a schematic diagram of pixel segmentation and distortion correction of an image according to some embodiment of the present disclosure.
FIG. 11 is a schematic diagram of a method for acquiring the pixel length of the vehicle head according to some embodiment of the present disclosure.
FIG. 12 is a schematic diagram of a method for averaging a plurality of frames of images according to some embodiments of the present disclosure.
FIG. 13 is a schematic diagram of a method for acquiring the distance from a camera to a moving object according to the present disclosure.
FIG. 14 is a schematic diagram of a method for measuring the distance between a camera and a moving object based on a ground reference line according to some embodiments of the present disclosure.
FIG. 15 is a schematic diagram of the similar triangle formula for length calculation of the vehicle head according to some embodiments of the present disclosure.
FIG. 16 is a schematic diagram of an apparatus for avoiding a vehicle head according to some embodiments of the present disclosure.
FIG. 17 is a schematic structural diagram of the apparatus for avoiding a vehicle head according to other embodiments of the present disclosure.

### DETAILED DESCRIPTION

Below, a clear and complete description will be given for the technical solution of embodiments of the present disclosure with reference to the figures of the embodiments. Obviously, merely some embodiments of the present disclosure, rather than all embodiments thereof, are given herein. The following description of at least one exemplary embodiment is in fact merely illustrative and is in no way intended as a limitation to the disclosure, its application or use. All other embodiments acquired by those of ordinary skill in the art based on the embodiments of the present disclosure without creative efforts shall fall within the protection scope of the present disclosure.

Unless otherwise specified, the relative arrangement, numerical expressions and values of the components and steps set forth in these examples do not limit the scope of the disclosure.

At the same time, it should be understood that, for ease of description, the dimensions of the various parts shown in the drawings are not drawn to actual proportions.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an item is defined in a drawing, there is no need for further discussion in the accompanying drawings.

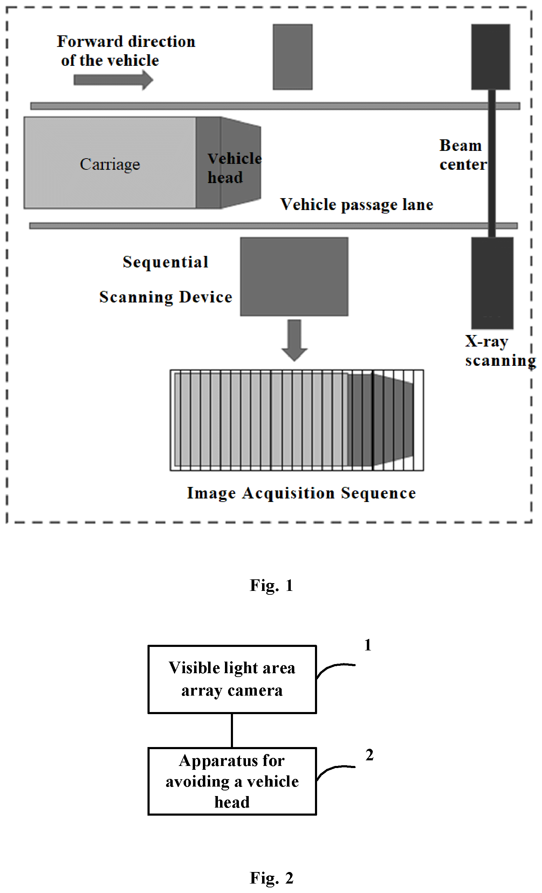

FIG. 1 is a schematic diagram of a method for avoiding a vehicle head based on an image acquisition sequence. As shown in FIG. 1, in related technologies, linear array image acquisition devices are utilized to capture linear sequence image information when vehicles pass through the system. Based on vehicle body information in the images, the position of the vehicle head is determined, thereby separating the vehicle head from the carriage. Subsequently, security inspections can be performed on the carriage.

The inventor found through research that in related technologies, the installation of a plurality of sets of light curtains or area laser sensors are installed in scanning passages, resulting in large floor space occupation and high construction costs.

The inventor also found through research that the methods of the acquisition devices in related technologies also have the following problems.
1. A plurality of sets of light curtains or area laser sensors are installed in a scanning passage, which takes up a large area and incurs high construction costs.
2. The images captured by linear array cameras are significantly affected by ambient lighting conditions and have high costs.
3. The calculation accuracy of the length of vehicle head using images acquired by linear array cameras, area laser sensors, and infrared light curtains is affected by the speed of the scanned vehicle.
4. The diverse structural designs of vehicle heads and carriages affect the algorithm's ability to recognize them accurately, requiring high debugging and maintenance costs.
5. For the images captured by area laser sensors and infrared light curtains, there is no gap between the vehicle head and the carriage, and there are carriage air conditioners and obstructions present on the top of the vehicle head, making recognition impossible.
6. Various special vehicle types that require scanning, such as construction vehicles, sedans, buses, etc., cannot be clearly distinguished.
In view of at least one of the technical problems mentioned above, the present disclosure provides a method, apparatus and system for avoiding a vehicle head, and computer-readable storage medium. By employing a visible light area array camera instead of a linear array image acquisition device, usage and installation costs can be reduced and the required floor space is reduced. The present disclosure will be described in detail below in conjunction with specific embodiments.

FIG. 2 is a schematic diagram of a system for avoiding a vehicle head according to the present disclosure. As shown in FIG. 2, the system for avoiding a vehicle head can comprise a visible light area array camera 1 and an apparatus for avoiding a vehicle head 2.

The visible light area array camera 1 is configured to capture an image of a vehicle to be detected.

The apparatus for avoiding a vehicle head 2 is configured to acquire the image of the vehicle to be detected captured by the visible light area array camera; acquire a focal length of the camera by correcting intrinsic and extrinsic parameters of the camera; process the image of the vehicle to be detected to acquire pixel length of the vehicle head; acquire a distance between the camera and the vehicle head; acquire real length of the vehicle head based on the focal length of the camera, the distance between the camera and the vehicle head, and the pixel length of the vehicle head; perform vehicle head avoidance based on the real length of the vehicle head.

The present disclosure adopts a visible light area array camera instead of a linear array image acquisition device, thereby reducing usage and installation costs while minimizing the required floor space.

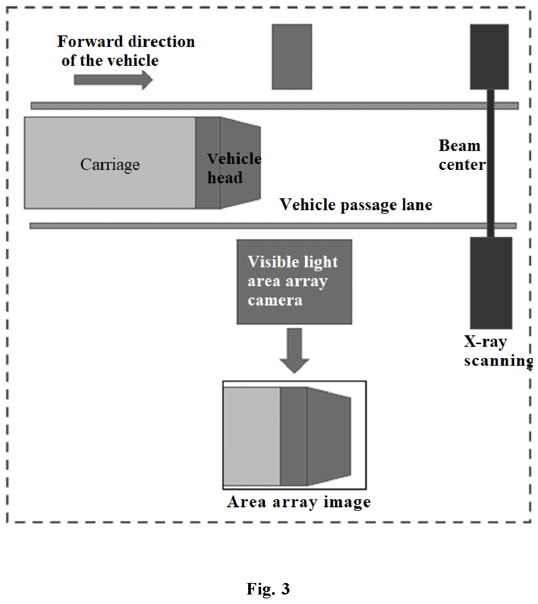

FIG. 3 is a schematic diagram of a method and system for avoiding a vehicle head according to some embodiments of the present disclosure. As shown in FIG. 3, in a vehicle passage lane, a vehicle to be detected passes through, and the vehicle to be detected comprises a vehicle head and a carriage. A visible light area array camera is installed in front of an X scanning device and is configured to capture area array images of the vehicle to be detected. The present disclosure utilizes a visible light area array camera to collect data for vehicle head avoidance.

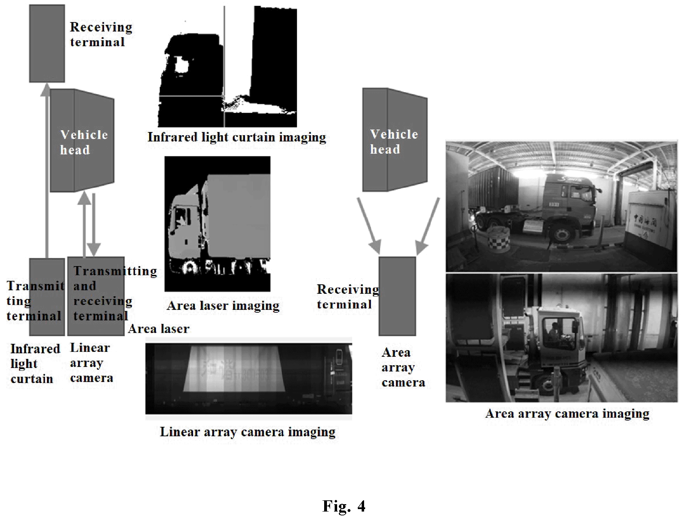

FIG. 4 is a schematic comparison diagram of an area array camera and a linear array image acquisition device according to some embodiments of the present disclosure. The present disclosure utilizes a visible light area array camera instead of a linear array image acquisition device (such as linear array cameras, area lasers, infrared light curtains, etc.) to collect data, thereby reducing the cost of use and installation.

As shown in FIG. 4, the linear array image acquisition device, equipped with a plurality of sets of light curtains and area laser sensors, occupies a large floor area and has high construction costs, which limits its application in low-cost and limited site scenarios.

The linear array camera of a linear array image acquisition device may be significantly affected by ambient lighting conditions and requires high-quality supplementary lighting. The imaging results are prone to overexposure (too bright) or underexposure (too dark), resulting in poor performance. The cost is also relatively high.

As shown in FIG. 4, the visible light area array camera of the present disclosure utilizes an ordinary fixed-focus camera, which has lower requirements for supplementary lighting, is less affected by ambient light compared to linear array cameras, is capable of achieving superior imaging quality, and has lower costs. For scenarios with limited space, a wide-angle camera can be employed, enabling a more compact installation structure for the overall system and reducing some additional costs.

The method and apparatus for avoiding a vehicle head of the present disclosure will be further described below through specific embodiments.

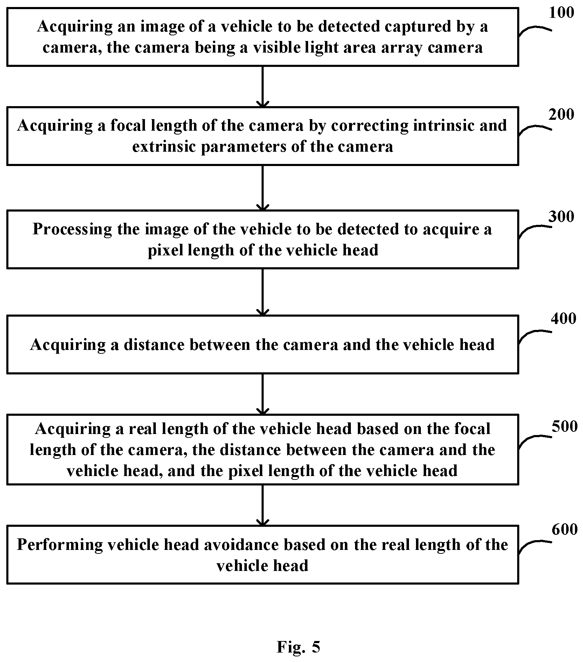

FIG. 5 is a schematic diagram of the method for avoiding a vehicle head according to some embodiments of the present disclosure. The embodiment shown in FIG. 5 can be implemented by the apparatus for avoiding a vehicle head or the system for avoiding a vehicle head of the present disclosure. As shown in FIG. 5, the method of the embodiment shown in FIG. 5 may comprise at least one of step 100 to step 600.

In step 100, an image of a vehicle to be detected that is captured by a visible light area array camera is acquired.

In some embodiments of the present disclosure, step 100 may comprise: receiving an image of a vehicle to be detected captured by a visible light area array camera.

In some embodiments of the present disclosure, step 100 may comprise: acquiring a single image of a vehicle to be detected or a plurality of frames of consecutive images of the vehicle to be detected captured by a visible light area array camera.

In some embodiments of the present disclosure, step 100 may comprise: performing single-shot imaging by the visible light area array camera, without being affected by the speed of a passing vehicle, wherein the passing vehicle is the vehicle to be detected.

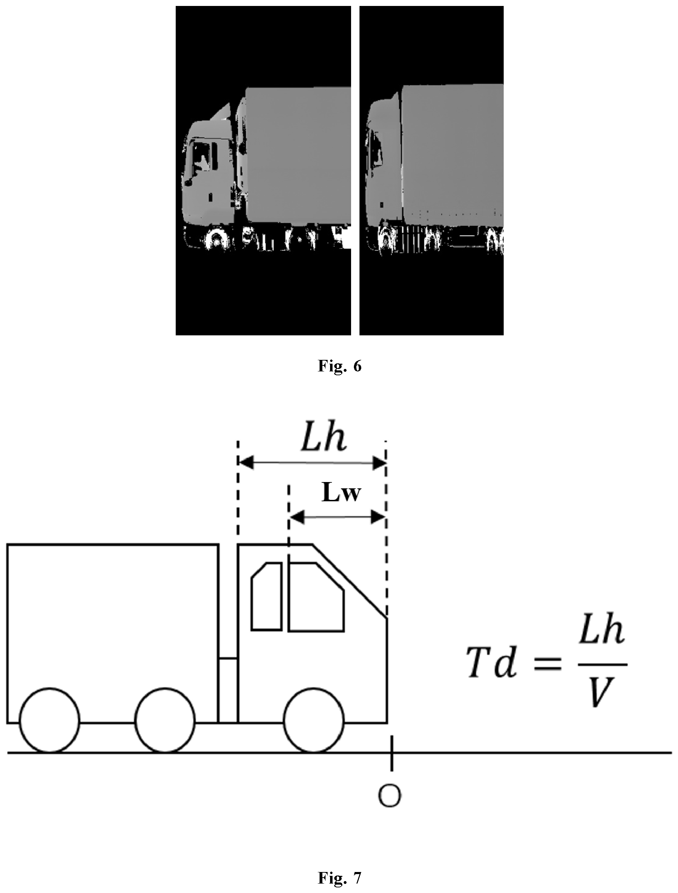

The inventor found through research that the image acquisition methods of linear array image acquisition devices utilized in related technology are affected by the speed of the scanned vehicle; An excessively high vehicle speed results in image stretching, while an excessively low speed leads to image compression. FIG. 6 is a schematic diagram of compressed vehicle head and wheels in relevant technical images. As shown in FIG. 6, an assistance device is required for measuring vehicle speed to provide correction parameters and maintain a constant imaging ratio. On this basis, algorithms are used to extract feature information of the vehicle head and carriage and distinguish the pixel set of the vehicle head, after which the length of the vehicle head is calculated. It can thus be inferred that the speed measurement accuracy of the speed-measuring devices in relevant technologies affects the length measurement of the vehicle head.

FIG. 7 is a schematic diagram of the basic principle of the vehicle head avoidance process according to some embodiments of the present disclosure. As shown in FIG. 7, in order to prevent the beam from scanning the driver, a delay time Td is required to trigger the timing when the vehicle head reaches the beam emission point O.

Assuming the vehicle speed remains constant, the beam emission delay time Td is equal to the length Lh of the vehicle head divided by the vehicle speed V.

This requires the acquisition device to be not too far away from the beam emission point O; the greater the distance, the more significant the variation in vehicle speed. If only a single set of speed measuring devices is used, it may result in a discrepancy between the final beam delay time Td and the actual required beam delay time Tdr, which poses a potential safety hazard, thereby requiring additional speed measuring devices.

If the application scenario requires scanning from the rear edge of the driver's seat to the rear end of the vehicle head, the calculation should commence from the position Lw at the rear edge of the vehicle window, which cannot be guaranteed by area laser and infrared light curtains in related technologies.

The present disclosure utilizes a visible light area array camera, which enables one-shot imaging and is unaffected by the speed of passing vehicles. The installation requirements for the speed measurement device are reduced, and its position can be set according to actual needs. The camera no longer needs to be installed at a location close to the beam emission point. Additionally, there is relatively abundant time for image processing.

A single ordinary fixed-focus area array camera can be selected as the area array camera in the present disclosure to achieve the length measurement of the vehicle head. The selection is relatively flexible and can be based on actual application scenarios.

For the image acquisition method of the area array camera in the present disclosure, a sensor is used to detect the vehicle head passing through a passage and provide a trigger signal. The image of the vehicle head corresponding to the trigger time point in the video stream is then captured and processed. The captured image can be a single-frame image or consecutive frames of images.

For the image acquisition of the area array camera in the present disclosure, image capture can also be achieved by using a moving object detection algorithm to control the trigger signal.

In step 200, a focal length of the camera is acquired by correcting intrinsic and extrinsic parameters of the camera.

In some embodiments of the present disclosure, step 200 may comprise: correcting the intrinsic and extrinsic parameters of the camera, and acquiring the focal length F through formula calculation with the help of a reference object.

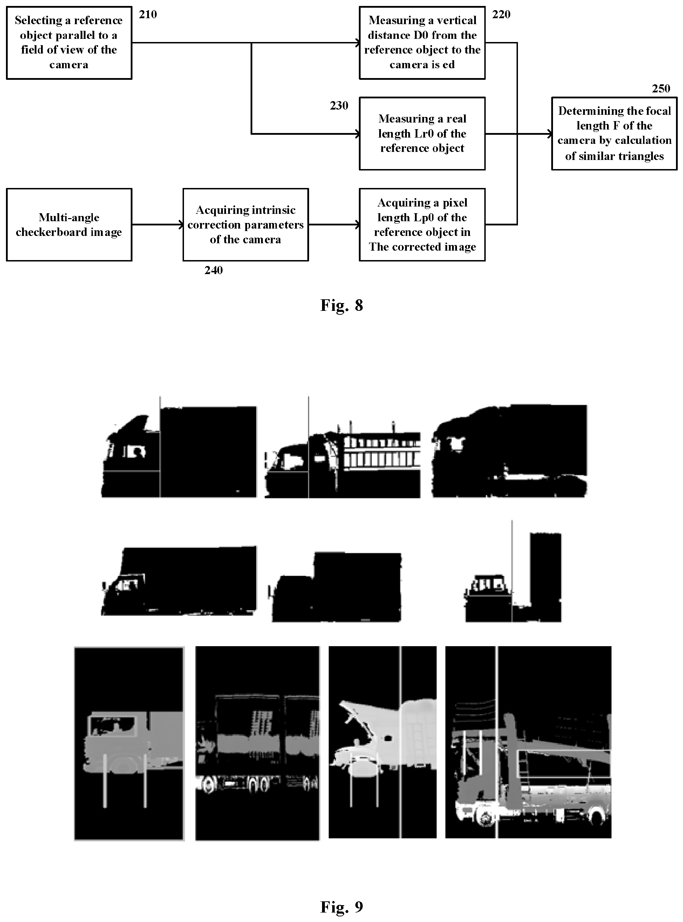

FIG. 8 is a schematic diagram of a method for acquiring a focal length of the camera according to some embodiments of the present disclosure. As shown in FIG. 8, the method for acquiring the focal length of the camera of the present disclosure (e.g., step 200 in the embodiment of FIG. 5) may comprise at least one of step 210 to step 250.

In step 210, a reference object parallel to a field of view of the camera is selected.

In step 220, a vertical distance D0 from the reference object to the camera is measured.

In step 230, a real length Lr0 of the reference object is measured.

In some embodiments of the present disclosure, step 230 may comprise: calibrating the real length Lr0 of the reference object based on an external reference object.

In step 240, intrinsic correction parameters of the camera are acquired through multi-angle checkerboard images, and pixel length Lp0 of the reference object in corrected images is acquired.

In step 250, the focal length F of the camera is determined based on the vertical distance D0 from the reference object to the camera, the real length Lr0 of the reference object, and the pixel length Lp0 of the reference object in corrected images.

In some embodiments of the present disclosure, step 250 may comprise: determining the focal length F of the camera according to Formula (1).

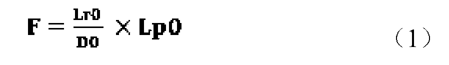

In step 300, the image of the vehicle to be detected is processed to acquire the pixel length of the vehicle head.

In some embodiments of the present disclosure, step 300 may comprise: acquiring a set of pixels of the vehicle head through a pixel segmentation algorithm, correcting the intrinsic and extrinsic parameters of the camera to acquire the corrected pixel length of the vehicle head.

In some embodiments of the present disclosure, step 300 may comprise: extracting a set of pixels of a moving object from the image through pixel segmentation, and acquiring the pixel length Lp of the moving object through distortion correction.

The inventor found through research that in related technologies, since the raw data collected by area lasers and infrared light curtains requires conversion to generate grayscale or binary images, lacking RGB color information.

The above embodiments of the present disclosure have the advantage that the visible light images acquired by the visible light area array camera contain RGB information.

The inventor found through research that in related technologies, due to the structural differences among various vehicle heads and carriages, when there is no gap between the vehicle head and the carriage, and when there are a carriage air conditioner and other obstructions on the top of the vehicle head, most of the differential information of different parts in the image is lost. All of these may affect the line marking result for the vehicle head position, leading to avoidance failure. As shown in FIG.9, FIG. 9 is a schematic diagram illustrating the defects in length segmentation of the vehicle head in binary and grayscale images. It can be seen that for the requirements of only scanning a portion of the vehicle, binary images cannot provide more accurate scanning positions, such as the rear edge of the driver's seat, and window positions, which are obstructed and thus cannot be penetrated or distinguished.

In some embodiments of the present disclosure, step 300 may comprise: performing pixel segmentation on the image of the vehicle to be detected to determine positions of a plurality of components of the vehicle head, wherein the components comprises at least one of a window, a wheel, a rear edge of a driver's seat, a rear end of the vehicle head, or a front end of the vehicle head, and the image of the vehicle to be detected is a visible light image. Thus, the above embodiments of the present disclosure can accurately determine the positions of the plurality of components of the vehicle head.

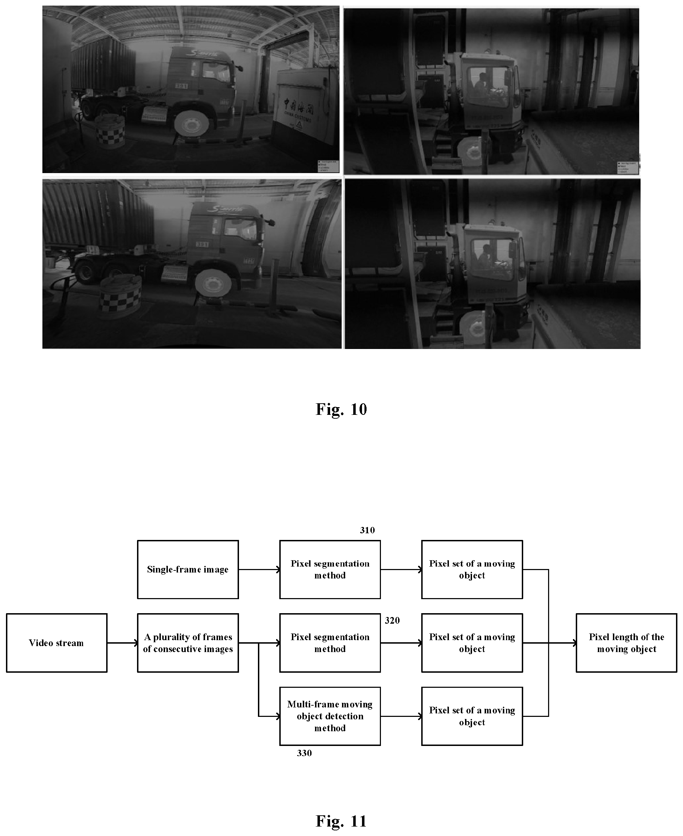

FIG. 10 is a schematic diagram of pixel segmentation and distortion correction of an image according to some embodiment of the present disclosure. As shown in FIG. 10, the visible light pixel segmentation can clearly distinguish the plurality of components of the vehicle head, with a focus on the entire vehicle head, the window, and wheel positions. By means of precise segmentation, specific scanning positions are provided. It makes it possible to scan an area inside the vehicle head, from the rear edge of the driver's seat to the rear end of the vehicle head. The present disclosure enhances the processing accuracy with respect to determining the length of the vehicle head.

FIG. 11 is a schematic diagram of a method for acquiring the pixel length of the vehicle head according to some embodiment of the present disclosure. The pixel length of the vehicle head are an important factor affecting the accuracy of length calculation. As shown in FIG. 11, the present disclosure can use pixel segmentation methods (comprising pixel clustering, semantic segmentation, instance segmentation, etc.) as well as methods combining multi-frame moving target tracking to obtain a set of pixels corresponding to the vehicle head, all of which can extract the pixel length of the vehicle head.

In some embodiments of the present disclosure, as shown in FIG. 11, the method for acquiring the pixel length of the vehicle head of the present disclosure (such as step 300 in the embodiment of FIG. 5) may comprise at least one of steps 310 to 330.

In step 310, for a single-frame image, a pixel set of the vehicle head is extracted through a pixel segmentation method to acquire the pixel length of the vehicle head, wherein the pixel segmentation method comprises at least one of a pixel clustering method, a semantic segmentation method, or an instance segmentation method.

In some embodiments of the present disclosure, step 310 may comprise: for a single-frame image, extracting a pixel set of a moving object of interest through the pixel segmentation method to acquire the pixel length of the moving object. However, due to the influence of the shooting perspective, the front and rear of the vehicle head, which are located at different positions during image acquisition, may also be comprised in the calculation. This results in relatively poor accuracy in calculating the length of the vehicle head.

In step 320, for a video stream, a plurality of frames of consecutive images are acquired. For the a plurality of frames of consecutive images, the pixel segmentation results of the plurality of frames are averaged to determine the pixel length of the vehicle head.

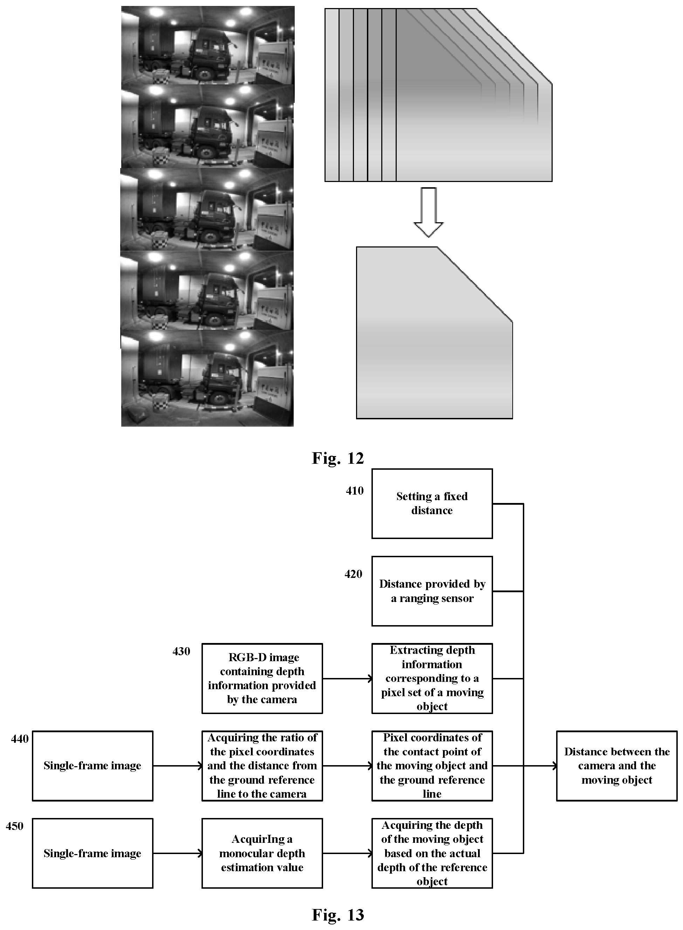

In the above embodiment of the present disclosure, for a plurality of frames of consecutive images, by utilizing the pixel-segmentation result of each frame and averaging these results, the influence of perspective transformation can be eliminated, thereby acquiring the pixel lengths that are relatively more accurate than those from a single frame. As shown in FIG. 12, FIG. 12 is a schematic diagram of a method for averaging a plurality of image frames according to some embodiments of the present disclosure.

In step 330, for a video stream, a plurality of frames of consecutive images are acquired; for the a plurality of frames of consecutive images, a background is filtered out by using a multi-frame moving object detection method for a moving vehicle to be detected in a lane, to acquire a pixel set of the vehicle head.

In the above embodiment of the present disclosure, by filtering out the background for the moving object within the lane through multi-frame moving object detection, a relatively accurate pixel set of the entire moving object can be acquired. Combined with the above method (averaging the plurality of frames of images), it is possible to filter out some background influences and acquire more accurate pixel length.

In step 400, a distance between the camera and the vehicle head is acquired.

In some embodiments of the present disclosure, step 400 may comprise: acquiring a distance D between the camera and a moving object through hardware or algorithms, wherein the moving object is the vehicle head.

In some embodiments of the present disclosure, the distance between the vehicle head and the camera is an important factor influencing the accuracy of length calculation. The accuracy of distance calculation is correlated with the accuracy of vehicle head pixel segmentation, and the final length calculation accuracy of the vehicle head is most closely correlated with the accuracy of vehicle head pixel segmentation.

In some embodiments of the present disclosure, the distance between the vehicle head and the camera can be acquired through methods such as setting a fixed distance, using a ranging sensor to provide the distance, providing the distance by combining a RGB-D image (which comes with built-in depth information from the camera) with pixel segmentation information, monocular depth estimation, and distance calculation based on reference objects, wherein, the RGB-D image is a depth image that comprises a three-channel color image and a depth map.

The above embodiment of the present disclosure can determine the distance between the camera and the vehicle head using any of a plurality of methods according to different needs and operating conditions.

FIG. 13 is a schematic diagram of a method for acquiring the distance from a camera to a moving object according to the present disclosure. In the present disclosure, the moving object can be a vehicle to be detected that comprises a vehicle head. In the present disclosure, the moving object can be a vehicle head. As shown in FIG. 13, the method for acquiring the distance from the camera to the vehicle head in the present disclosure (such as step 400 in the embodiment of FIG. 5) may comprise at least one of steps 410 to 450.

In step 410, a fixed distance is set as the distance between the camera and the vehicle head.

For heavy-duty trucks or buses, which have a relatively large width and need to pass through fixed lanes with limited width, the allowable deviation to the left or right in the forward direction is restricted. In such cases, the distance from the camera to the object can be set as a fixed value based on empirical data. However, for small passenger-cargo vans with narrow widths or fixed lanes with larger widths, the allowable lateral (left-right) deviation distance increases, which can lead to significant calculation errors in the length of the vehicle head. Therefore, this method should be selected based on actual conditions.

In step 420, a ranging sensor is utilized to provide a distance as the distance between the camera and the vehicle head.

By using a ranging sensor device, the distance between the camera and the object can be measured with relatively the highest precision. However, in certain scenarios, its application is restricted due to installation constraints and cost limitations.

In step 430, depth information corresponding to the pixel set of the vehicle head is extracted from a depth image containing depth information provided by the camera to determine the distance between the camera and the vehicle head.

The present disclosure utilizes an RGB-D camera with built-in depth information, enabling superior measurement precision. However, the camera has limitations in resolution and field of view, and relatively high costs. Thus, the deployment of such a camera can be determined based on specific scenario requirements.

In step 440, for a single-frame image, the distance between the camera and the vehicle head is determined based on a distance and the reference object information provided by pixel segmentation information.

In some embodiments of the present disclosure, step 440 may comprise at least one of steps 441 to 445.

In step 441, a first reference point P₁ and a second reference point P₂ are specified on the ground, with the first reference point P₁ and the second reference point P₂ being associated with a first reference pixel (P₁) and a second reference pixel (P₂) in an image captured by a monocular camera.

In step 442, a point D to be measured is designated in correspondence with a pixel to be measured in the image captured by the monocular camera, wherein the point D to be measured is a marking point D where the vehicle head contacts the ground.

In step 443, a vertical projection point of the camera on the ground is designated as a coordinate origin O, wherein a distance OD between the point D to be measured and the coordinate origin O is greater than a distance OP₁ between the first reference point P₁ and the coordinate origin O, and a distance OD between the point D to be measured and the coordinate origin O is less than a distance OP₂ between the second reference point P₂ and the coordinate origin O.

In step 444, the distance P₁D between the first reference point P₁ and the point D to be measured is determined based on the distance P₁P₂ between the first reference point P₁ and the second reference point P₂, the distance (pixel(P₁P₂)) between the first reference pixel (P₁) and the second reference pixel (P₂), and the distance(pixel(P₁D)) between the first reference pixel(P₁) and the pixel(D) to be measured.

In some embodiments of the present disclosure, step 400 may comprise: determining a second ratio based on a ratio of the distance(pixel(P₁D)) between the first reference pixel(P₁) and the pixel(D) to be measured, to the distance (pixel(P₁P₂)) between the first reference pixel (P₁) and the second reference pixel (P₂); determining the distance P₁D between the first reference point P₁ and the point D to be measured based on a product of the second ratio and the distance P₁P₂ between the first reference point P₁ and the second reference point P₂.

In step 445, the distance OD between the camera C and the vehicle head is determined based on the distance OP₁ between the first reference point P₁ and the coordinate origin O, and the distance P₁D between the first reference point P₁ and the point D to be measured.

In some embodiments of the present disclosure, step 445 may comprise: determining the distance OD between the camera C and the vehicle head based on the sum of the distance OP₁ between the first reference point P₁ and the coordinate origin O, and the distance P₁D between the first reference point P₁ and the point D to be measure.

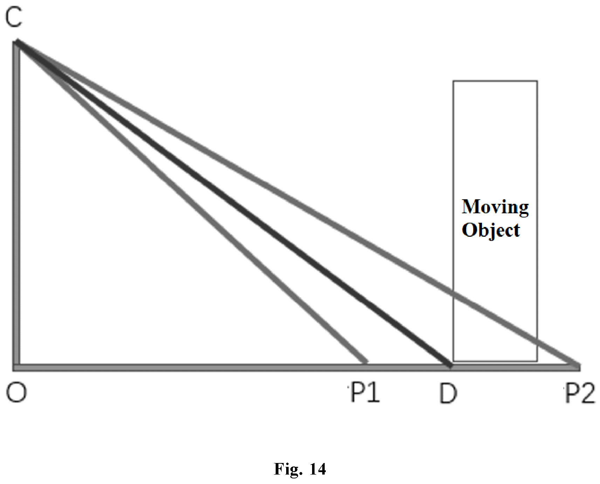

FIG. 14 is a schematic diagram of a method for measuring the distance between a camera and a moving object based on a ground reference line according to some embodiments of the present disclosure. As shown in FIG. 14, the distance OD from the camera C to the moving object is acquired based on a ground reference line and a contact point. A first reference point P₁ and a second reference point P₂ that are set for the monocular camera on the ground correspond to a first reference pixel (P₁) and a second reference pixel (P₂) on the captured image, and a reference pixel (D) on the captured image corresponding to the marking point D where the moving object contacts the ground is used to calculate the distance OD, which is determined by formulas (2) and (3). Then, the distance from the camera to the moving object is acquired through indirect calculation. This method is limited to situations where the relative position between the marking point D and the surface of the moving object is fixed. $OD = O {P}_{1} + {P}_{1} D$ (2) ${P}_{1} D = \frac{pixel \left({P}_{1}D\right)}{pixel \left({P}_{1}{P}_{2}\right)} \times {P}_{1} {P}_{2}$ (3)

In some embodiments of the present disclosure, the relative distance between the side of the door at the vehicle head and the wheel is fixed, and they are essentially on the same plane. The wheel surface can represent the side of the vehicle head. That is, the distance between the wheel surface and the camera is equivalent to the distance between the vehicle head and the camera. The method only requires a fixed ground calibration reference. As long as the camera remains stationary and is not replaced, the disappearance of the ground calibration reference will not have an impact, eliminating the need for a secondary calibration since the parameters remain fixed. The accuracy of distance calculation is correlated with the precision of wheel pixel segmentation, while the final accuracy of vehicle head length calculation is most significantly correlated with the precision of vehicle head pixel segmentation.

In step 450, for a single-frame image, a monocular depth estimation value is acquired, the depth of the vehicle head is acquired based on the monocular depth estimation value and the actual depth of the reference object, and then the distance between the camera and the vehicle head is determined.

In step 500, the real length of the vehicle head is acquired based on the focal length of the camera, the distance between the camera and the vehicle head, and the pixel length of the vehicle head.

In some embodiments of the present disclosure, step 500 may comprise: determining a first ratio based on the ratio of the pixel length of the vehicle head to the focal length of the camera; and determining the real length of the vehicle head based on a product of the first ratio and the distance between the camera and the vehicle head.

In some embodiments of the present disclosure, step 500 may comprise: calculating to acquire the real length (Lr) of the moving object by applying the principle of similar triangles.

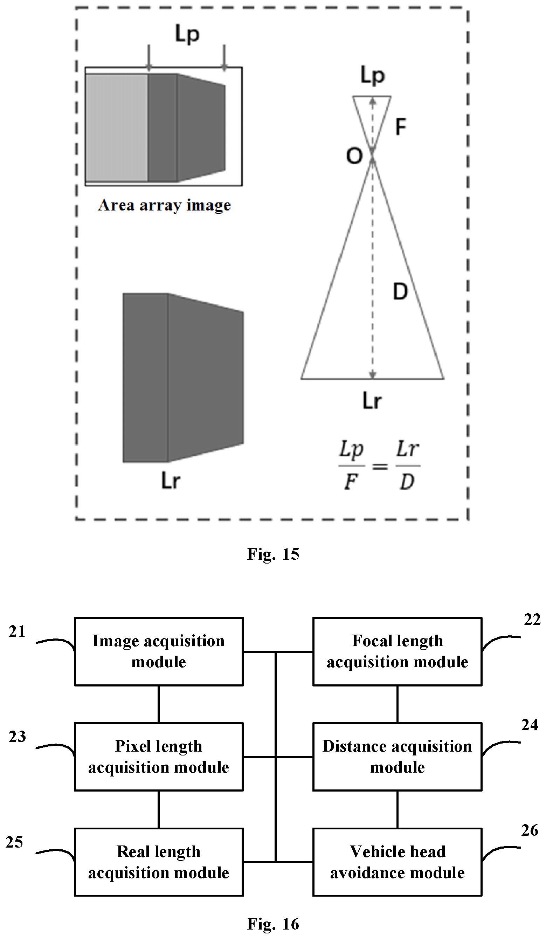

FIG. 15 is a schematic diagram of the similar triangle formula for length calculation of the vehicle head according to some embodiments of the present disclosure. As shown in FIG. 15, step 500 of the embodiment shown in FIG. 5 may be described as follows. According to formula (4), the ratio of Lp (the pixel length of the vehicle head in the camera image) to F (the focal length of the camera) is equal to the ratio of Lr (the actual length of the vehicle head) to D (the distance between the camera and the vehicle head). After acquiring D and F, Lr can be calculated based on the Lp of different vehicle heads. $\frac{Lp}{F} = \frac{Lr}{D}$ (4)

In step 600, vehicle head avoidance is performed based on the real length of the vehicle head.

In some embodiments of the present disclosure, step 600 may comprise at least one of step 610 and step 620.

In step 610, a vehicle head avoidance area is determined.

In some embodiments of the present disclosure, the determining the vehicle head avoidance area comprises any one of steps 611 to 613.

In step 611, an area (as shown in FIG. 7, Lh) from the front end of the vehicle head to the rear end of the vehicle head is specified as the vehicle head avoidance area.

In step 612, an area from the front end of the vehicle head to the rear edge of the driver's seat is specified as the vehicle head avoidance zone.

In step 613, an area (as shown in FIG. 7, Lw) from the front end of the vehicle head to the rear edge of the window is specified as the vehicle head avoidance area.

The above embodiments of the present disclosure can, based on different requirements, specify various vehicle head avoidance areas according to the precise positions of different components of the vehicle head (such as the rear edge of the driver's seat, the rear edge of the window, the front end of the vehicle head, and the rear end of the vehicle head).

In step 620, vehicle head avoidance is performed based on the vehicle head avoidance area to scan non-avoidance areas, wherein the non-avoidance areas are areas of the vehicle other than the vehicle head avoidance area.

The measurement errors in determining the length of the vehicle head using relevant technologies such as laser, infrared light curtain, and linear array cameras comprise: a speed measurement device error (random error); an error from image feature extraction algorithm (random error); and impact of binary or grayscale image resolution.

The errors in measuring the length of the vehicle head using an area array camera in the present disclosure comprise: an error of the image pixel segmentation algorithm (random error); an error in camera intrinsic parameter calibration (systematic error); an error in extrinsic parameter calibration (systematic error); a ranging error (classified as segmentation algorithm error in the method of FIG. 14); a ranging error (with distance measurement device or RGB-D method, random error); and impact of pixel resolution.

The systematic errors in the present disclosure can be reduced by compensation through calibration; random errors can be reduced by averaging a plurality of measurements.

The error of speed measurement devices in relevant technologies is random error. Because it provides real-time speed measurement and acquires images of the corresponding number of pixel columns, it is impossible to average a plurality of measurements. The generated binary or grayscale image is also a one-time generated image that cannot be repeatedly acquired. The impact of random errors is significant.

The image in the present disclosure can be captured multiple times, and the random errors can be reduced through averaging. During distance measurement, the vehicle body length is relatively large, allowing multiple measurements, and random errors can be reduced through averaging. The impact of random errors is relatively small compared to the relevant methods.

The feature extraction algorithms in relevant technologies are affected in terms of accuracy due to the absence of RGB information and the lack of information from different structures in the images. The pixel segmentation algorithm in the present disclosure can effectively distinguish information from different structures, exhibiting relatively high algorithmic accuracy.

Both the relevant technologies and the present disclosure share similar resolution parameters for the input images. Consequently, the impacts of resolution on the performance of these two approaches demonstrate a high degree of similarity.

For both the relevant technologies and the method presented in the present disclosure, after measuring the length of the vehicle head, the subsequent vehicle head avoidance procedure is associated with the speed measurement device. Moreover, since the factors influencing the avoidance effect are identical, they will not be further discussed.

In comparison, the method presented in the present disclosure holds an advantage in terms of the measurement accuracy of the length of the vehicle head. The method utilizing visible light area array images in the present disclosure demonstrates an advantage in terms of the measurement accuracy of the length of the vehicle head.

FIG. 16 is a schematic diagram of an apparatus for avoiding a vehicle head according to some embodiments of the present disclosure. As shown in FIG. 16, the apparatus for avoiding a vehicle head of the present disclosure (such as the apparatus 2 for avoiding a vehicle head in the embodiment of FIG. 2) may comprise an image acquisition module 21, a focal length acquisition module 22, a pixel length acquisition module 23, a distance acquisition module 24, a real length acquisition module 25, and a vehicle head avoidance module 26.

The image acquisition module 21 is configured to acquire an image of a vehicle to be detected captured by a camera 1.

In some embodiments of the present disclosure, the image acquisition module 21 may be configured to acquire a single image of the vehicle to be detected or a plurality of consecutive frames of images of the vehicle to be detected captured by the visible light area array camera.

In some embodiments of the present disclosure, the image acquisition module 21 can be configured to perform single-shot imaging by the visible light area array camera, without being affected by the speed of the vehicle to be detected.

The focal length acquisition module 22 is configured to acquire a focal length of the camera by correcting the intrinsic and extrinsic parameters of the camera.

In some embodiments of the present disclosure, the focal length acquisition module 22 may be configured to select a reference object parallel to the a field of view of the camera; measure a vertical distance from the reference object to the camera; measure a real length of the reference object; acquire intrinsic correction parameters of the camera through multi-angle checkerboard images, and acquiring a pixel length of the reference object in a corrected image; determine the focal length of the camera based on the vertical distance from the reference object to the camera, the real length of the reference object, and the pixel length of the reference object in the corrected image.

The pixel length acquisition module 23 is configured to process the image of the vehicle to be detected to acquire the pixel length of the vehicle head.

In some embodiments of the present disclosure, the pixel length acquisition module 23 can be configured to perform pixel segmentation on the image of the vehicle to be detected to determine positions of a plurality of components of the vehicle head, wherein the components comprises at least one of a window, a wheel, a rear edge of a driver's seat, a rear end of the vehicle head, or a front end of the vehicle head, and the image of the vehicle to be detected is a visible light image.

In some embodiments of the present disclosure, the pixel length acquisition module 23 can be configured to extract, for a single-frame image, a pixel set of the vehicle head through a pixel segmentation method to acquire the pixel length of the vehicle head, wherein the pixel segmentation method comprises at least one of a pixel clustering method, a semantic segmentation method, or an instance segmentation method

In some embodiments of the present disclosure, the pixel length acquisition module 23 can be configured to average, for a plurality of frames of consecutive images, pixel segmentation results of the plurality of frames to determine the pixel length of the vehicle head; filter out, for the a plurality of frames of consecutive images, a background by using a multi-frame moving object detection method for a moving vehicle to be detected in a lane, to acquire a pixel set of the vehicle head.

The distance acquisition module 24 is configured to acquire the distance between the camera and the vehicle head.

In some embodiments of the present disclosure, to acquire a distance between the camera and the vehicle head, the distance acquisition module 24 is configured to perform at least one of: setting a fixed distance as the distance between the camera and the vehicle head; using a distance provided by a ranging sensor as the distance between the camera and the vehicle head; extracting depth information corresponding to a pixel set of the vehicle head from a depth image containing depth information provided by the camera to determine the distance between the camera and the vehicle head, wherein the depth image comprises a three-channel color image and a depth map; for a single-frame image, determining the distance between the camera and the vehicle head based on a distance and reference object information provided by pixel segmentation information; or for a single-frame image, acquiring a monocular depth estimation value, and acquiring a depth of the vehicle head based on an actual depth of the reference object to determine the distance between the camera and the vehicle head.

In some embodiments of the present disclosure, to determine the distance between the camera and the vehicle head based on a distance provided from pixel segmentation information and reference object information, the distance acquisition module 24 is configured to set a first reference point and a second reference point on the ground, and set the first reference point and the second reference point corresponding to a first reference pixel and a second reference pixel in an image captured by a monocular camera; set a point to be measured corresponding to a pixel to be measured in the image captured by the monocular camera, wherein the point to be measured is a marking point where the vehicle head contacts the ground; set a vertical projection point of the camera on the ground as a coordinate origin, wherein a distance between the point to be measured and the coordinate origin is greater than a distance between the first reference point and the coordinate origin, and the distance between the point to be measured and the coordinate origin is less than a distance between the second reference point and the coordinate origin; determine a distance between the first reference point and the point to be measured based on the distance between the first reference point and the second reference point, the distance between the first reference pixel and the second reference pixel, and the distance between the first reference pixel and the point to be measured; and determine the distance between the camera and the vehicle head based on the distance between the first reference point and the coordinate origin, and the distance between the first reference point and the point to be measured.

In some embodiments of the present disclosure, to determine a distance between the first reference point and the point to be measured based on a distance between the first reference point and the second reference point, a distance between the first reference pixel and the second reference pixel, and a distance between the first reference pixel and the point to be measured, the distance acquisition module 24 is configured to determine a second ratio based on the ratio of the distance between the first reference pixel and the pixel to be measured, to the distance between the first reference pixel and the second reference pixel; and determine the distance between the first reference point and the point to be measured based on a product of the second ratio and the distance between the first reference point and the second reference point.

The real length acquisition module 25 is configured to acquire real length of the vehicle head based on the focal length of the camera, the distance between the camera and the vehicle head, and the pixel length of the vehicle head.

In some embodiments of the present disclosure, the real length acquisition module 25 may be configured to determine a first ratio based on the ratio of the pixel length of the vehicle head to the focal length of the camera; and determine the real length of the vehicle head based on a product of the first ratio and the distance between the camera and the vehicle head.

The vehicle head avoidance module 26 is configured to perform vehicle head avoidance based on the real length of the vehicle head.

In some embodiments of the present disclosure, the vehicle head avoidance module 26 is configured to determine a vehicle head avoidance area; and perform the vehicle head avoidance according to the vehicle head avoidance area, and scan areas other than the vehicle head avoidance area.

In some embodiments of the present disclosure, to determine a vehicle head avoidance area, the vehicle head avoidance module 26 is configured to perform at least one of: setting an area from the front end of vehicle head to the rear end of the vehicle head as the vehicle head avoidance area; setting an area from the front end of the vehicle head to the rear edge of the driver's seat as the vehicle head avoidance area; or setting an area from the front end of the vehicle head to a rear edge of a window as the vehicle head avoidance area.

In some embodiments of the present disclosure, the apparatus for avoiding a vehicle head can be configured to perform the method for avoiding a vehicle head as described in any of the above embodiments (for example, any of the embodiments shown in FIG.s 3 to 15).

The above embodiment of the present disclosure utilizes the visible light area array camera to collect data for vehicle head avoidance. A set of pixels of the vehicle head is acquired through a pixel segmentation algorithm. The intrinsic and extrinsic parameters of the camera are corrected to acquire the pixel length from the corrected image. The real length of the moving object is acquired by applying the principle of similar triangles.

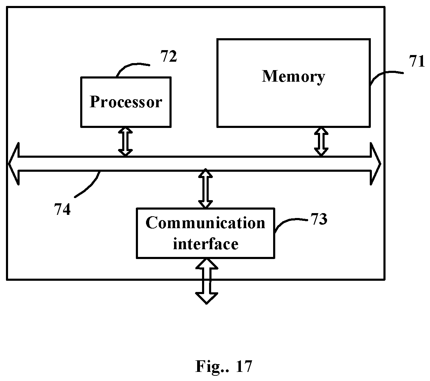

FIG. 17 is a schematic structural diagram of the apparatus for avoiding a vehicle head according to other embodiments of the present disclosure. As shown in FIG. 17, the apparatus for avoiding a vehicle head of the present disclosure (such as the apparatus for avoiding a vehicle head 2 in the embodiment of FIG. 2) comprises a memory 71 and a processor 72.

The memory 71 is used to store instructions. The processor 72 is coupled to the memory 71, and is configured to, based on instructions stored in the memory, carry out a method for avoiding a vehicle head involved in the above embodiments (e.g., any one of the embodiments shown in FIGS. 3 to 15).

As shown in FIG. 17, the apparatus for avoiding a vehicle head further comprises a communication interface 73 for performing information interaction with other devices. In addition, the apparatus for avoiding a vehicle head further comprises a bus 74. The processor 72, the communication interface 73, and the memory 71 perform communication with each other through the bus 74.

The memory 71 may comprise a high speed RAM memory, and may also comprise a non-volatile memory such as at least one disk storage device. The memory 71 may also be a memory array. The memory 71 may also be partitioned into blocks, which may be combined into virtual volumes according to a certain rule.

In addition, the processor 72 may be a central processing unit (CPU), or may be an Application Specific Integrated Circuit (ASIC) or one or more integrated circuits configured to implement the embodiments of the present disclosure.

According to another aspect of the present disclosure, there is provided a computer-readable storage medium stored thereon computer instructions that, when executed by a processor, perform the method for avoiding a vehicle head as described in any of the above embodiments (e.g., any one of the embodiments shown in FIGS. 3 to 15).

The computer readable storage medium of the present disclosure is a non-transitory computer readable storage medium.

One skilled in the art should understand that, the embodiments of the present disclosure may be provided as a method, an apparatus, or a computer program product. Therefore, embodiments of the present disclosure can take the form of an entirely hardware embodiment, an entirely software embodiment or an embodiment containing both hardware and software elements. Moreover, the present disclosure may take the form of a computer program product embodied on one or more computer-usable non-transitory storage media (comprising but not limited to disk storage, CD-ROM, optical storage device, etc.) having computer-usable program code embodied therein.

The present disclosure is described with reference to flowcharts and/or block diagrams of methods, apparatuses (systems) and computer program products according to embodiments of the present disclosure. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing apparatus to generate a machine such that the instructions executed by a processor of a computer or other programmable data processing apparatus to generate means implementing the functions specified in one or more flows of the flowcharts and/or one or more blocks of the block diagrams.

The computer program instructions may also be stored in a computer readable storage device capable of directing a computer or other programmable data processing apparatus to operate in a specific manner such that the instructions stored in the computer readable storage device produce an article of manufacture comprising instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

The apparatus for avoiding a vehicle head, the image acquisition module, the focal length acquisition module, the pixel length acquisition module, the distance acquisition module, the real length acquisition module, and the vehicle head avoidance module described above may be implemented as a general-purpose processor for performing the functions described in this application, Programmable logic controller (PLC), digital signal processor (DSP), application specific integrated circuit (ASIC), field programmable gate array (FPGA) or other programmable logic devices, discrete gates or transistor logic devices, discrete hardware components or any appropriate combination thereof.

As appreciated by those skilled in the art, all or part of the steps of the method of the disclosed embodiments can be completed by hardware, which can be implemented as a general-purpose processor, a programmable logic controller, a digital signal processor, a specific integrated circuit, a field programmable gate array or other programmable logic devices, discrete gates or transistor logic devices, discrete hardware components or any appropriate combination thereof.

Heretofore, the present disclosure has been described in detail. In order to avoid obscuring the concepts of the present disclosure, some details known in the art are not described. Based on the above description, those skilled in the art can understand how to implement the technical solutions disclosed herein.

A person skilled in the art can understand that all or part of the steps for carrying out the method in the above embodiments can be completed by hardware or a program instructing the related hardware, wherein the program can be stored in a non-transitory computer readable storage medium. The storage medium may be a read-only memory (ROM), a magnetic disk or a compact disk (CD).

The above description of this disclosure is given for illustration and description, but is not exhaustive and is not intended to limit the present disclosure to the form disclosed herein. Various modifications and variations are apparent for a person of ordinary skill in the art. Embodiments are selected and described for a better illustration of the principle and practical application of this disclosure, so that those skilled in the art can understand this disclosure and envisage various embodiments with various modifications suited to specific usages.

## Claims

1. A method for avoiding a vehicle head, comprising:
acquiring an image of a vehicle to be detected captured by a camera, the camera being a visible light area array camera;
acquiring a focal length of the camera by correcting intrinsic and extrinsic parameters of the camera;
processing the image of the vehicle to be detected to acquire a pixel length of the vehicle head;
acquiring a distance between the camera and the vehicle head;
acquiring a real length of the vehicle head based on the focal length of the camera, the distance between the camera and the vehicle head, and the pixel length of the vehicle head; and
performing vehicle head avoidance based on the real length of the vehicle head.

2. The method for avoiding a vehicle head according to claim 1, wherein the acquiring a real length of the vehicle head based on the focal length of the camera, the distance between the camera and the vehicle head, and the pixel length of the vehicle head comprises:
determining a first ratio based on a ratio of the pixel length of the vehicle head to the focal length of the camera; and
determining the real length of the vehicle head based on a product of the first ratio and the distance between the camera and the vehicle head.

3. The method for avoiding a vehicle head according to claim 1 or 2, wherein the acquiring an image of a vehicle to be detected captured by a camera comprises:
acquiring a single image of the vehicle to be detected or a plurality of consecutive frames of images of the vehicle to be detected captured by the visible light area array camera.

4. The method for avoiding a vehicle head according to any one of claims 1 to 3, wherein the acquiring an image of a vehicle to be detected captured by a camera comprises:
performing single-shot imaging by the visible light area array camera, without being affected by the speed of the vehicle to be detected.

5. The method for avoiding a vehicle head according to any one of claims 1 to 4, wherein the processing the image of the vehicle to be detected to acquire a pixel length of the vehicle head comprises:
performing pixel segmentation on the image of the vehicle to be detected to determine positions of a plurality of components of the vehicle head, wherein the components comprises at least one of a window, a wheel, a rear edge of a driver's seat, a rear end of the vehicle head, or a front end of the vehicle head, and the image of the vehicle to be detected is a visible light image.

6. The method for avoiding a vehicle head according to claim 5, wherein the performing vehicle head avoidance based on the real length of the vehicle head comprises:
determining a vehicle head avoidance area; and
performing the vehicle head avoidance according to the vehicle head avoidance area, and scanning areas other than the vehicle head avoidance area.

7. The method for avoiding a vehicle head according to claim 6, wherein the determining a vehicle head avoidance area comprises any one of:
setting an area from the front end of vehicle head to the rear end of the vehicle head as the vehicle head avoidance area;
setting an area from the front end of the vehicle head to the rear edge of the driver's seat as the vehicle head avoidance area; or
setting an area from the front end of the vehicle head to a rear edge of a window as the vehicle head avoidance area.

8. The method for avoiding a vehicle head according to any one of claims 1 to 7, wherein the processing the image of the vehicle to be detected to acquire a pixel length of the vehicle head comprises:
for a single-frame image, extracting a pixel set of the vehicle head through a pixel segmentation method to acquire the pixel length of the vehicle head, wherein the pixel segmentation method comprises at least one of a pixel clustering method, a semantic segmentation method, or an instance segmentation method.

9. The method for avoiding a vehicle head according to any one of claims 1 to 8, wherein the processing the image of the vehicle to be detected to acquire pixel length of the vehicle head comprises:
for a plurality of frames of consecutive images, averaging pixel segmentation results of the plurality of frames to determine the pixel length of the vehicle head; and
for the plurality of frames of consecutive images, filtering out a background by using a multi-frame moving object detection method for a moving vehicle to be detected in a lane, to acquire a pixel set of the vehicle head.

10. The method for avoiding a vehicle head according to any one of claims 1 to 9, wherein the acquiring a focal length of the camera by correcting intrinsic and extrinsic parameters of the camera comprises:
selecting a reference object parallel to a field of view of the camera;
measuring a vertical distance from the reference object to the camera;
measuring a real length of the reference object;
acquiring intrinsic correction parameters of the camera through multi-angle checkerboard images, and acquiring a pixel length of the reference object in a corrected image; and
determining the focal length of the camera based on the vertical distance from the reference object to the camera, the real length of the reference object, and the pixel length of the reference object in the corrected image.

11. The method for avoiding a vehicle head according to any one of claims 1 to 10, wherein the acquiring a distance between the camera and the vehicle head comprises at least one of:
setting a fixed distance as the distance between the camera and the vehicle head;
using a distance provided by a ranging sensor as the distance between the camera and the vehicle head;
extracting depth information corresponding to a pixel set of the vehicle head from a depth image containing depth information provided by the camera to determine the distance between the camera and the vehicle head, wherein the depth image comprises a three-channel color image and a depth map;
for a single-frame image, determining the distance between the camera and the vehicle head based on a distance and reference object information provided by pixel segmentation information; or
for a single-frame image, acquiring a monocular depth estimation value, and acquiring a depth of the vehicle head based on an actual depth of the reference object to determine the distance between the camera and the vehicle head.

12. The method for avoiding a vehicle head according to claim 11, wherein the determining the distance between the camera and the vehicle head based on a distance and reference object information provided by pixel segmentation information comprises:
setting a first reference point and a second reference point on the ground, and setting the first reference point and the second reference point corresponding to a first reference pixel and a second reference pixel in an image captured by a monocular camera;
setting a point to be measured corresponding to a pixel to be measured in the image captured by the monocular camera, wherein the point to be measured is a marking point where the vehicle head contacts the ground;
setting a vertical projection point of the camera on the ground as a coordinate origin, wherein a distance between the point to be measured and the coordinate origin is greater than a distance between the first reference point and the coordinate origin, and the distance between the point to be measured and the coordinate origin is less than a distance between the second reference point and the coordinate origin;
determining a distance between the first reference point and the point to be measured based on a distance between the first reference point and the second reference point, a distance between the first reference pixel and the second reference pixel, and a distance between the first reference pixel and the point to be measured; and
determining the distance between the camera and the vehicle head based on the distance between the first reference point and the coordinate origin, and the distance between the first reference point and the point to be measured.

13. The method for avoiding a vehicle head according to claim 12, wherein the determining a distance between the first reference point and the point to be measured based on a distance between the first reference point and the second reference point, a distance between the first reference pixel and the second reference pixel, and a distance between the first reference pixel and the point to be measured comprises:
determining a second ratio based on a ratio of the distance between the first reference pixel and the pixel to be measured, to the distance between the first reference pixel and the second reference pixel; and
determining the distance between the first reference point and the point to be measured based on a product of the second ratio and the distance between the first reference point and the second reference point.

14. An apparatus for avoiding a vehicle head, comprising:
an image acquisition module configured to acquire an image of a vehicle to be detected captured by a camera, the camera being a visible light area array camera;
a focal length acquisition module configured to acquire a focal length of the camera by correcting intrinsic and extrinsic parameters of the camera;
a pixel length acquisition module configured to process the image of the vehicle to be detected to acquire a pixel length of the vehicle head;
a distance acquisition module configured to acquire a distance between the camera and the vehicle head;
a real length acquisition module configured to acquire a real length of the vehicle head based on the focal length of the camera, the distance between the camera and the vehicle head, and the pixel length of the vehicle head; and
a vehicle head avoidance module configured to perform vehicle head avoidance based on the real length of the vehicle head.

15. An apparatus for avoiding a vehicle head, comprising:
a memory for storing computer instructions; and
a processor used to execute the instructions to enable the apparatus for avoiding a vehicle head to implement the method for avoiding a vehicle head according to any one of claims 1 to 13.

16. A system for avoiding a vehicle head, comprising:
a visible light area array camera configured to capture an image of a vehicle to be detected; and
an apparatus for avoiding a vehicle head according to claim 14 or 15.

17. A computer-readable storage medium on which computer program instructions are stored, which when executed by a processor implement the method for avoiding a vehicle head according to any one of claims 1 to 13.

18. A computer program, comprising:
instructions that, when executed by a processor, cause the processor to perform the method for avoiding a vehicle head according to any one of claims 1 to 13.
